# FASCICULE DE BREVET EUROPEEN

(11) **EP 3 087 624 B1**
(45) Date de publication et mention de la délivrance du brevet: **18.10.2017**
(21) Numéro de dépôt: 14821661.7
(22) Date de dépôt: 24.12.2014
(51) Int. Cl.: H01M 2/10, H01M 2/02

(54) **MODULE DE BATTERIE ELECTROCHIMIQUE OFFRANT UNE TENUE AUX ENVIRONNEMENTS HUMIDES AMELIOREE ET PROCEDE DE REALISATION D'AU MOINS UN TEL MODULE**
ELEKTROCHEMISCHES BATTERIEMODUL MIT ERHÖHTER RESISTENZ IN FEUCHTEN UMGEBUNGEN UND VERFAHREN ZUR HERSTELLUNG VON MINDESTENS EINEM DERARTIGEN MODUL
ELECTROCHEMICAL BATTERY MODULE HAVING IMPROVED RESISTANCE IN MOIST ENVIRONMENTS AND METHOD FOR PRODUCING AT LEAST ONE SUCH MODULE

(30) Priorité: 26.12.2013 FR 1363613
(43) Date de publication de la demande: 02.11.2016
(73) Titulaire: Commissariat à l'Énergie Atomique et aux Énergies Alternatives, 75015 Paris (FR)
(72) Inventeur: CHATROUX, Daniel, F-38470 Teche (FR); CARCOUET, Sébastien, F-38450 Vif (FR); CARMINATI, Jean-Noël, F-73100 Aix les Bains (FR); GAILLARD, Frédéric, F-38500 Voiron (FR)
(74) Mandataire: Brevalex
(86) Numéro de dépôt international: PCT/EP2014/079298
(87) Numéro de publication internationale: WO 2015/097280

(56) Documents cités:
- JP-A- H0 737 563
- JP-A- 2009 266 740

## Description

### DOMAINE TECHNIQUE ET ART ANTÉRIEUR

La présente invention se rapporte à un module pour batterie électrochimique offrant une tenue aux environnements humides améliorée, les batteries réalisées avec ces modules étant notamment utilisées dans le domaine des transports électriques et hybrides et dans les systèmes embarqués.

Les batteries de type lithium ion sont bien adaptées pour l'utilisation dans le domaine des transports et pour des applications embarquées du fait de leur possibilité de stocker une forte énergie avec une faible masse.

Le niveau de tension aux bornes de ces batteries étant de plus en plus élevé, par exemple 300V - 400V pour des voitures et 600V - 800V pour des autobus ou camions électriques il devient alors nécessaire de concevoir des protections performantes aussi bien vis-à-vis des biens que des personnes.

Le fait d'utiliser une batterie de forte capacité (plusieurs dizaines d'Ah) et de forte tension (400Vdc) nécessite des précautions pour la protection des biens et des personnes.

Pour des raisons de sécurité électrique lors de la fabrication, du transport ainsi que la maintenance, il est préféré que les batteries soient scindées en modules de tensions unitaires plus faibles, par exemple inférieures à 48Vdc.

Ces modules sont composés d'une pluralité d'accumulateurs reliés électriquement. Ces accumulateurs doivent être protégés des conditions atmosphériques telles que les poussières, la pluie, la neige, la grêle, l'air marin et des variations de conditions atmosphériques, par exemple de la condensation de l'eau. En effet la présence d'eau peut donner lieu au démarrage d'un arc électrique. En outre, l'humidité et le brouillard salin peuvent dégrader fortement la durée de vie des batteries car ils amplifient le phénomène de corrosion.

Afin de protéger les accumulateurs ainsi que les cartes électroniques assurant la gestion des accumulateurs des conditions extérieures, ceux-ci sont classiquement disposés dans un caisson étanche. La réalisation de l'étanchéité du caisson pose des problèmes. Par ailleurs, en fonctionnement les accumulateurs libèrent de la chaleur or le confinement dans un volume étanche ne favorise pas l'évacuation de la chaleur. Cela a un impact important sur la durée de vie des accumulateurs qui commence à décroitre dès que la température dépasse 35°C typiquement, et qui décroit rapidement à partir de 45°C.

Plusieurs solutions ont été proposées pour évacuer cette chaleur.

Une des solutions est d'assurer une circulation d'air extérieur autour du caisson. Cette solution est applicable dans le cas où l'échauffement est faible.

Dans le cas où l'échauffement est plus important, le refroidissement est assuré à l'intérieur du caisson par la circulation d'un fluide caloporteur entre les accumulateurs d'un même module. Ce fluide est classiquement de l'eau, qui est choisie pour ses grandes qualités de transfert thermique. Cette solution impose une très grande qualité des étanchéités pour ne pas avoir de fuite d'eau pouvant amener des courants de fuite, des risques de court-circuit et des départs de feu. Cette solution augmente la masse de l'ensemble et son coût, en outre elle est de réalisation relativement complexe, notamment du fait des étanchéités qui doivent résister dans un véhicule, les joints vieillissant et subissant des vibrations

Une autre solution consiste à faire circuler l'air entre les accumulateurs. Mais le refroidissement par la circulation d'air directement prélevé de l'environnement extérieur n'est pas ou peu utilisé du fait des conditions atmosphériques qui peuvent provoquer l'apparition de condensation, de l'eau de pluie, de la neige, de la glace sur et entre les accumulateurs. Une solution pour pallier les conditions atmosphériques est d'utiliser un air séché et traité pour en retirer la poussière et éventuellement conditionné à la température souhaitée avant d'entrer en contact avec les accumulateurs. Cet air est prélevé par exemple de l'habitacle, son débit est limité pour ne pas impacter le confort des passagers.

### EXPOSÉ DE L'INVENTION

C'est par conséquent un but de la présente invention d'offrir un module d'accumulateurs de batterie offrant à la fois une bonne protection vis-à-vis des conditions atmosphériques et un bon échange thermique avec l'environnement extérieur, de réalisation simple et de masse réduite.

C'est également un but supplémentaire de l'invention d'offrir une batterie comportant des accumulateurs dont l'isolation électrique les uns par rapport aux autres est améliorée.

Le but énoncé ci-dessus est atteint par un module de batterie comportant une pluralité d'accumulateurs connectés électriquement entre eux et des moyens de gestion des accumulateurs, l'ensemble étant enrobé d'une ou plusieurs couches de vernis continues, ce vernis étant isolant électrique, seules les connexions vers l'extérieur n'étant pas recouvertes.

La couche continue de vernis assure une protection des différents composants d'un module de batterie vis-à-vis des conditions atmosphériques, ils sont alors protégés de la corrosion par la pollution et par l'humidité. La réalisation de l'étanchéité est donc simplifiée et la masse du module est réduite sensiblement par rapport à un module confiné dans un caisson étanche.

La protection au moyen d'une couche de vernis présente en outre l'avantage de permettre à l'air de circuler directement le long des accumulateurs. Dans le cas d'accumulateurs empilés, des passages existent entre les accumulateurs, le vernis permet de conserver libre ces passages, ceux-ci étant alors traversés par un fluide assurant l'évacuation de la chaleur, par exemple l'air extérieur. Ces passages forment une grande surface d'échange thermique. Ainsi, par rapport à un module confiné dans un caisson étanche, l'air de refroidissement circule directement entre les accumulateurs, ce qui assure une très bonne évacuation de la chaleur. De plus, la couche de vernis étant très fine, de l'ordre de 10 µm à 100 µm par exemple, celle-ci ne joue pas le rôle d'isolant thermique. De plus l'air prélevé directement de l'extérieur peut être utilisé pour le refroidissement sans séchage préalable de celui-ci.

En d'autres termes on réalise un bloc monolithique d'accumulateurs protégés de l'environnement extérieur par l'enrobage de vernis, ledit bloc offrant une grande surface d'échange thermique.

Grâce à l'invention, l'échange thermique entre les accumulateurs et l'air extérieur est très bon du fait de l'absence de circuits d'échange intermédiaires et du fait de l'utilisation de toute la surface de contact de toutes les parois de tous les accumulateurs pour le transfert thermique. Ceci est un avantage très important par rapport aux solutions de refroidissement de l'état de la technique, par exemple à base d'eau, où le transfert thermique dans le fluide est très efficace, mais est limité par une trop petite surface de contact de transfert thermique entre chacun des accumulateurs et les échangeurs avec l'eau du fait de contraintes d'intégration.

Par ailleurs, la tenue mécanique de l'empilement d'accumulateurs est avantageusement améliorée par la ou les couches de vernis.

Le module est réalisé par trempage d'un assemblage d'accumulateurs préalablement connectés entre eux, les connexions vers l'extérieur et éventuellement les dispositifs de sécurité en cas de surpression éventuels étant protégés lors de l'étape de trempage.

De manière particulièrement avantageuse, un tirage au vide est effectué lors de l'étape de trempage pour assurer un bon enrobage.

Avantageusement, les accumulateurs regroupés en un ou plusieurs modules peuvent être disposés chacun sur un support isolant électrique dont la forme permet d'éviter l'apparition d'un film de liquide continu, qui pourrait former un chemin conducteur, entre deux modules ou un module et un autre élément conducteur par exemple lorsque les modules sont en présence d'air humide ou soumis à de la condensation de celui-ci. Pour cela, le support comporte sur sa surface inférieure à l'opposé de la surface supérieure supportant le ou les accumulateurs un ou des zones en saillie ou en retrait aptes à rompre le film d'eau susceptible de se former et à provoquer l'écoulement de l'eau sous forme de goutte.

Avantageusement, des moyens pour surveiller l'isolant électrique entre le module disposé sur le support isolant et un élément conducteur métallique au moins à l'aplomb de la ou des zones en saillies ou en retrait.

Ainsi en provoquant l'écoulement par gravité d'un filet d'eau, on évite l'apparition d'un chemin de conduction entre les accumulateurs sur ce support et d'autres accumulateurs ou entre les accumulateurs sur ce support et un autre élément conducteur tel que la carrosserie d'un véhicule. En outre, en vérifiant l'isolation électrique entre le module et l'élément conducteur électrique, la sécurité de fonctionnement de la batterie peut être gérée.

Cette caractéristique additionnelle permet de pallier les risques de présence de défaut d'isolation des accumulateurs.

Dans un exemple avantageux, les accumulateurs sont regroupés en plusieurs modules, les modules étant connectés entre eux, chaque module est disposé sur un support isolant selon l'invention, ainsi les modules sont isolés entre eux.

De manière encore plus avantageuse, les supports de modules sont supportés par un support isolant commun qui est lui-même par exemple supporté par le toit d'un véhicule. Ce support isolant commun permet également l'écoulement par gravité d'un filet d'eau éventuel réduisant les risques d'une conduction entre un ou des modules et la carrosserie.

La présente invention a alors pour objet un module pour batterie électrochimique comportant au moins deux accumulateurs connectés électriquement entre eux par au moins un élément de connexion, des moyens de connexion électrique du module avec l'extérieur et une enveloppe continue réalisée en un matériau polymère diélectrique recouvrant la surface extérieure des accumulateurs et le au moins élément de connexion et ne recouvrant pas les moyens de connexion du module avec l'extérieur, ladite enveloppe continue étant réalisée par trempage de sorte à assurer un enrobage des accumulateurs et dudit au moins élément de connexion. Le module comporte avantageusement plusieurs accumulateurs répartis en plusieurs couches, disposés les uns par rapport au autres de sorte qu'un ou des passages soient ménagés entre les accumulateurs, l'enveloppe recouvrant la surface du ou des accumulateurs délimitant les passages entre les accumulateurs.

Très avantageusement, l'épaisseur de l'enveloppe est comprise entre 10 µm et 300 µm.

Dans un exemple de réalisation, l'enveloppe est formée de plusieurs couches réalisées successivement, les couches étant dans un même matériau polymère ou dans des matériaux polymères différents.

Par exemple, le ou les matériaux polymères est (sont) choisi(s) parmi les vernis acrylique, silicone ou phénolique.

Dans un exemple de réalisation, les accumulateurs sont de forme cylindrique à section circulaire, les accumulateurs étant disposés en quinconce.

Le module peut avantageusement comporte des moyens formant entretoise interposés entre les accumulateurs.

Selon une caractéristique additionnelle, au moins un accumulateur comporte un dispositif de sécurité contre la surpression, de type à soupape de surpression. Le dispositif de sécurité contre la surpression peut être recouvert d'un capuchon apte à être éjecté en cas de surpression. Ce capuchon peut de manière additionnelle comporter une soupape de surpression. Le capuchon peut être recouvert par le polymère de l'enveloppe. En variante, un matériau de remplissage est prévu dans le dispositif de sécurité de surpression empêchant le matériau polymère de perturber le fonctionnement du dispositif de sécurité de surpression.

Selon une caractéristique additionnelle, au moins une partie de la surface du ou des passages peut présenter un état de surface apte à provoquer un écoulement turbulent.

Dans un exemple de réalisation, au moins un des accumulateurs a une enveloppe en matériau poreux, de type carton apte à être imprégné par le matériau polymère.

Le module peut comporter une électronique de mesure, d'équilibrage et de gestion à laquelle il est connecté par une connexion électrique, l'électronique de mesure, d'équilibrage et de gestion et ladite connexion électrique étant recouverte par l'enveloppe en matériau polymère.

La présente invention a également pour objet une batterie comportant au moins deux modules selon l'invention.

La batterie peut comporter des moyens pour générer un déplacement d'air entre les accumulateurs.

Selon une caractéristique avantageuse, la batterie peut comporter au moins un module comprenant un ou plusieurs accumulateurs connectés entre eux, au moins un support isolant électrique sur lequel est disposé une partie au moins des accumulateurs, ledit support isolant électrique comportant une face supérieure sur laquelle repose la partie au moins des accumulateurs et une face inférieure, et au moins une zone en saillie ou en retrait de la face inférieure formée dans ou sur ladite face inférieure, ladite zone bordant tout ou partie du contour extérieur de la face inférieure et un élément support sur lequel repose ledit support isolant électrique, de sorte que ladite zone soit disposée à distance d'une surface sur lequel repose l'élément support afin de provoquer un écoulement par gravité d'un filet de liquide potentiel.

Avantageusement, la surface comporte au moins un élément métallique conducteur situé au moins à l'aplomb de la zone en saillie ou en retrait et des moyens pour vérifier l'isolation électrique entre ledit élément métallique conducteur et le module ou toute partie conductrice connectée à une borne dudit module.

Les moyens pour vérifier l'isolation électrique entre ledit élément métallique conducteur et le module ou toute partie conductrice connectée à une borne dudit module sont par exemple des moyens de surveillance de la variation d'impédance entre ledit élément conducteur métallique conducteur et le module ou toute partie conductrice connectée à une borne dudit module.

Dans un exemple préféré, les accumulateurs sont répartis en au moins deux modules, les accumulateurs de chaque module étant connectés électriquement entre eux et les modules étant connectés électriquement entre eux, chaque module étant porté par un support isolant électrique, ledit support isolant électrique comportant une face supérieure sur laquelle repose la partie au moins des accumulateurs et une face inférieure, et au moins une zone en saillie ou en retrait de la face inférieure formée dans ou sur ladite face inférieure, ladite zone bordant tout ou partie du contour extérieur de la face inférieure et un élément support sur lequel repose ledit support isolant électrique, de sorte que ladite zone soit disposée à distance d'une surface sur lequel repose l'élément support afin de provoquer un écoulement par gravité d'un filet de liquide potentiel.

De manière avantageuse, la surface comporte un élément métallique conducteur situé au moins à l'aplomb de chaque zone en saillie ou en retrait et des moyens pour vérifier l'isolation électrique entre chaque élément conducteur métallique et le module associé ou toute partie conductrice connectée à une borne dudit module.

Dans un exemple de réalisation, les éléments conducteurs électriques sont connectés électriquement les uns aux autres. Les éléments supports sont en matériau conducteur électrique et en contact électrique les uns avec les autres et forment les éléments conducteurs électriques.

Dans un exemple avantageux, la batterie peut comporter un support commun en matériau isolant électrique aux supports de module, le support commun étant destiné à reposer sur une surface conductrice électrique, comportant une face supérieure sur laquelle repose le module et une face inférieure, et au moins une zone en saillie ou en retrait de la surface inférieure formée dans ou sur ladite face inférieure, ladite zone bordant tout ou partie du contour extérieur de la face inférieure de sorte que ladite zone en saillie ou en retrait du support commun soit disposée à distance de toute surface afin de provoquer un écoulement par gravité d'un filet de liquide.

Avantageusement, la batterie comporte des moyens pour surveiller l'isolation électrique entre les éléments métalliques conducteurs et la surface conductrice électrique sur laquelle est destiné à reposer le support commun. Les moyens pour surveiller l'isolation électrique sont par exemple des moyens de surveillance de la variation d'impédance entre la surface conductrice électrique et les éléments métalliques conducteurs.

La zone peut être formée par un élément en saillie. Le ou les supports peut ou peuvent être d'un seul tenant.

Selon une autre caractéristique, l'élément en saillie est rapporté sur la face inférieure.

La zone peut être rainurée. En variante, l'élément en saillie est réalisé d'un seul tenant ou par assemblage de plusieurs pièces.

Les supports et/ou l'élément en saillie sont par exemple réalisés en résine époxy ou en composite verre et époxy.

La face supérieure du ou des supports isolants peut être bombée ou comporter au moins deux pans inclinés vers l'extérieur pour faciliter l'évacuation de l'eau.

Au moins la face supérieure du ou des supports isolants peut avantageusement offrir des propriétés d'hydrophobie.

La présente invention a également pour objet un véhicule automobile comportant au moins une batterie selon l'invention.

La batterie repose avantageusement sur la carrosserie du véhicule automobile. Dans un exemple de réalisation mettant en oeuvre au moins un support isolant, la carrosserie n'est pas connectée à une tension de référence.

La présente invention a également pour objet un procédé de réalisation d'un module de batterie électrolytique, comportant au moins deux accumulateurs électrolytiques, comprenant les étapes:
a) répartition en plusieurs couches des accumulateurs de sorte qu'un ou des passages soient ménagés entre les accumulateurs,
b) la connexion électrique des accumulateurs entre eux pas des éléments de connexion et la réalisation de moyens de connexion du module vers l'extérieur,
c) protection des moyens de connexion vers l'extérieur,
d) réalisation d'une enveloppe continue en trempant les accumulateurs dans un bain de matériau polymère diélectrique, l'enveloppe continue recouvrant la surface du ou des accumulateurs délimitant le ou les passages entre les accumulateurs.
e) séchage du matériau polymère.

De préférence, un tirage au vide est réalisé lors de l'étape d).

Les accumulateurs peuvent être solidarisés entre eux avant l'étape d), par exemple par collage.

Dans le cas où l'étape d) est réalisée plusieurs fois, le matériau polymère peut être identique ou non au matériau polymère de l'étape d) précédente.

Dans le cas où au moins un accumulateur comporte un dispositif de sécurité contre la surpression, il est avantageusement prévu préalablement à l'étape d), de protéger le moyen de sécurité pour éviter un colmatage du dispositif de protection par le matériau polymère diélectrique.

Par exemple, la protection est réalisée au moyen d'un capuchon.

### BRÈVE DESCRIPTION DES DESSINS

La présente invention sera mieux comprise à l'aide de la description qui va suivre et des dessins en annexes sur lesquels :
- la figure 1 est une vue en perspective schématique d'un module d'accumulateurs selon l'invention,
- la figure 2 est une vue de face d'un exemple de réalisation d'un autre exemple de module d'accumulateurs selon l'invention,
- la figure 3A est une vue de face d'accumulateurs assemblés par collage directement les uns aux autres,
- la figure 3B est une vue de face d'accumulateurs, des espaceurs étant prévus entre les accumulateurs,
- la figure 4A est une représentation schématique d'un exemple de dispositif de sécurité pour accumulateur,
- la figure 4B est une représentation schématique d'un autre exemple de dispositif de sécurité pour accumulateur,
- la figure 5 est une représentation schématique d'un accumulateur muni d'un dispositif de surpression à sécurité améliorée,
- la figure 6 est une représentation schématique d'un exemple de montage d'un module de batterie sur un véhicule,
- les figures 7A à 7C sont des représentations schématiques de variantes de réalisation d'un support isolant pour module de batterie pouvant être mises en oeuvre dans le montage de la figure 6,
- les figures 8A à 8C sont des représentations schématiques d'autres variantes de réalisation d'un support isolant pour module de batterie,
- les figure 9A et 9B est une représentation schématique d'un montage de plusieurs modules,
- la figure 10 est une représentation schématique d'un montage de plusieurs modules mettant en oeuvre des supports individuels et un support collectif.

### EXPOSÉ DÉTAILLÉ DE MODES DE RÉALISATION PARTICULIERS

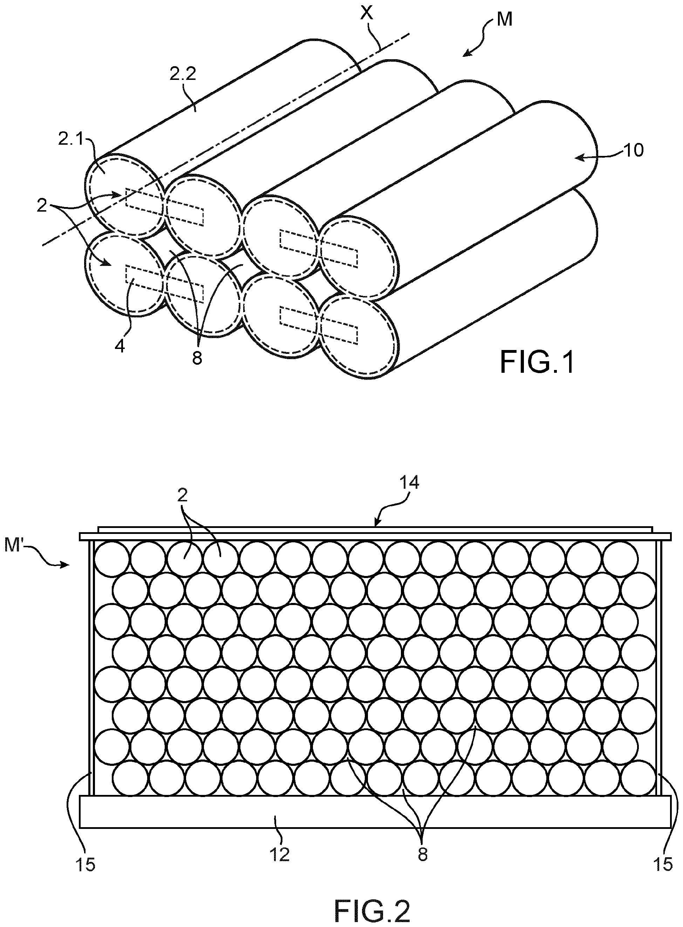

Sur la figure 1, on peut voir une représentation schématique d'un module d'accumulateurs pour batterie selon un exemple de réalisation de la présente invention. Un pack batterie comporte entre autres en général plusieurs modules connectés entre eux, une électronique de gestion, des bornes des connexions vers l'extérieur et une structure de support de ses différents éléments.

Dans cet exemple, le module M comporte huit accumulateurs 2 connectés électriquement entre eux par des pièces de liaison électrique 4 reliant des bornes de signes opposés de deux accumulateurs. Un module M comporte également un système électronique de gestion et d'équilibrage des accumulateurs porté par au moins une carte électronique (non représentée) et des liaisons électriques entre les accumulateurs et la carte électronique. Le module comporte également des bornes de connexion vers l'extérieur (non représentées).

Les accumulateurs 2 présentent un axe longitudinal X et sont généralement de forme cylindrique, avantageusement à section circulaire ou de forme prismatique. Ils comportent une première face 2.1 à une première extrémité longitudinale, une deuxième face (non visible) à une deuxième extrémité longitudinale et une surface latérale 2.2.

Dans l'exemple représenté, les accumulateurs étant tous de la même longueur, l'empilement d'accumulateurs comporte une première face contenant les premières faces 2.1 des accumulateurs 2 et une deuxième face (non visible) contenant les deuxièmes faces des accumulateurs 2. En variante, les accumulateurs pourraient présenter entre eux des dimensions différentes.

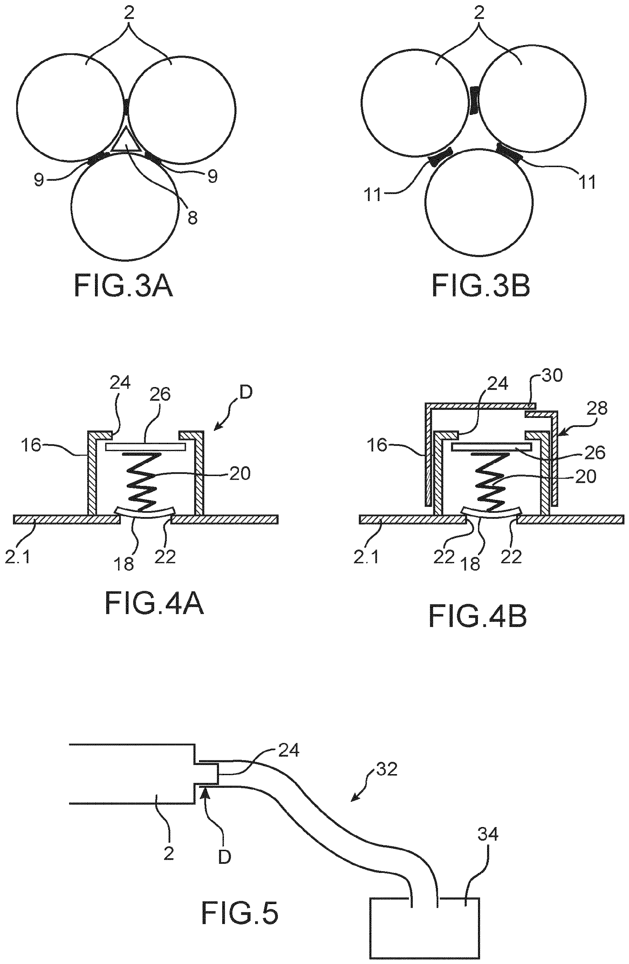

Lorsque les accumulateurs sont empilés, des espaces vides 8 sont ménagés entre les accumulateurs et s'étendent tout le long des accumulateurs et débouchent dans les première et deuxième faces de l'empilement. Ces espaces forment alors des canaux entre les accumulateurs. dans l'exemple représenté, les surfaces latérales 2.2 des accumulateurs 2 sont directement en contact, mais il peut être prévu de disposer entre les accumulateurs des entretoises 11 (figure 3B) de sorte à écarter les uns de autres les accumulateurs et ménager des canaux de section plus grande, et/ou permettre un circulation d'air entre les canaux. Par exemple, le entretoises sont collées chacune à deux accumulateurs. Les entretoises ont de préférence une forme telle qu'elles entrent en contact intime avec la paroi latérale des accumulateurs. La mise en oeuvre d'entretoises est d'autant plus intéressante dans le cas d'accumulateurs à section polygonale par exemple rectangulaire ou carrée.

Le module M comporte également une enveloppe 10 continue formée d'une ou plusieurs couches de vernis recouvrant les accumulateurs 2, les pièces de liaison électrique, la ou les cartes électroniques et les liaisons électriques et formant une enveloppe continue. Seuls les contacts électriques de puissance du module et les contacts électriques de l'électronique de gestion entre les modules ne sont pas recouverts.

Lorsque plusieurs couches successives recouvrent ou enrobent les éléments du module d'accumulateurs, les couches peuvent être faites toutes dans le même matériau ou dans des matériaux différents. La mise en oeuvre de plusieurs couches permet d'améliorer la tenue mécanique de la protection des éléments du module.

Cette enveloppe 10 recouvre les faces d'extrémité des accumulateurs, les faces latérales des accumulateurs formant les faces extérieures de l'empilement et celles délimitant les espaces vides et s'étendant entre les faces latérales des accumulateurs. L'enveloppe 10 de vernis forme alors une surface intérieure des canaux.

Le vernis forme une enveloppe étanche individuelle pour les accumulateurs et collective pour le module.

Les canaux 8 sont traversants et assurent une circulation d'air entre les accumulateurs évacuant la chaleur produite par le fonctionnement des accumulateurs.

La couche de vernis a une épaisseur comprise par exemple entre 10 µm et 100 µm. Dans le cas de plusieurs couches l'épaisseur totale peut atteindre 200 µm, voire 300 µm.

Le vernis mis en oeuvre présente des propriétés diélectriques, avantageusement il offre une tenue diélectrique élevée.

Le vernis est par exemple un vernis polymère, avantageusement un vernis acrylique, un vernis silicone ou un vernis phénolique. Ces vernis présentent une tenue diélectrique élevée, supérieure à 100 kV/mm. Ainsi avec des épaisseurs de vernis entre 10 µm et 100 µm, voire jusqu'à 300 µm une tenue diélectrique encore élevée est assurée.

Un vernis phénolique présente l'avantage d'assurer une bonne protection pour les départs de feu.

La couche de vernis continue assure une étanchéité de chaque composant du module et les protège contre la corrosion par la pollution et l'humidité de l'air. Il est alors possible de refroidir le module avec de l'air issu directement de l'extérieur, aucun séchage de l'air avant sa circulation entre les accumulateurs n'est requis. Le refroidissement du module est donc considérablement simplifié.

De manière avantageuse, le vernis peut être choisi tel qu'il offre en outre des propriétés hydrophobes, ainsi l'eau en surface est sous forme de gouttes au lieu d'être sous le forme de filets ou de films, ce qui augmente encore la protection des accumulateurs par exemple en cas d'un défaut dans la couche de vernis ou un manque de vernis.

Il est à noter que si, en général le vernis présente une conductivité thermique faible par rapport aux métaux, la couche de vernis étant d'épaisseur très faible, elle n'influe pas ou peu sur les échanges thermiques, et dans le cas d'un refroidissement par air, c'est la couche limite, la lame d'air immobile à la surface des parois des accumulateurs qui forme la majeure partie de la résistance thermique.

Préalablement à la réalisation de la couche de vernis, les accumulateurs peuvent être solidarisés les uns aux autres par collage ou un autre moyen. Avantageusement, le vernis peut assurer ou au moins renforcer cette solidarisation mécanique.

De manière avantageuse, on assure une circulation forcée de l'air ou d'un autre fluide de refroidissement afin d'assurer un débit de fluide de refroidissement suffisant pour être en régime turbulent afin de casser les couches limites à la surface des accumulateurs.

Sur la figure 2, on peut voir un exemple de réalisation avantageux d'un module M' dans lequel les accumulateurs 2 sont empilés en quinconce. Cette disposition a pour effet de réduire la section de passages des canaux 8 entre les accumulateurs, mais sans réduire la surface d'échange thermique. Dans le cas d'une circulation d'air forcée obtenue au moyen d'une ventilation, à débit d'air identique, la vitesse de l'air est plus élevée au contact des accumulateurs, ce qui améliore les échanges thermiques. Il en résulte en revanche une perte de charge un peu plus importante que dans le cas d'un empilement de la figure 1 et donc une légère augmentation de la consommation électrique de la ventilation.

Cet empilement en quinconce des accumulateurs offre également une plus grande rigidité mécanique de l'empilement lorsque les accumulateurs sont solidarisés les uns aux autres soit par collage préalablement à la réalisation de la couche de vernis, soit par la couche de vernis elle-même. Sur la figure 3A, les accumulateurs sont collés en quinconce par des points de colle 9. En variante, les accumulateurs sont solidarisés les uns aux autres uniquement par le vernis. Ainsi on obtient un module d'accumulateurs offrant une bonne tenue mécanique sans augmenter de manière sensible la masse de l'ensemble. En outre l'empilement en quinconce présente une plus grande compacité.

Les accumulateurs comportent par exemple une enveloppe latérale en matériau plastique diélectrique afin d'isoler les accumulateurs entre eux. Dans une variante avantageuse, l'enveloppe est formée par un matériau poreux, par exemple un carton poreux, qui lors de la réalisation de l'enrobage par le vernis va s'imprégner de vernis. D'une part cette imprégnation a pour effet d'améliorer la tenue mécanique entre les accumulateurs, d'autre part elle augmente la tenue diélectrique de l'enveloppe.

Le module M' de la figure 2 comporte une plaque support 12 sur laquelle sont empilés les accumulateurs, en quinconce dans l'exemple représenté, une carte électronique 14 disposée sur la surface supérieure de l'empilement à l'opposé de la plaque support 12, les liaisons électriques intra-accumulateurs et entre les accumulateurs et la carte électronique 14 ne sont pas représentées à des fins de simplicité. Une sangle 15 entoure l'empilement, la carte électronique et la plaque support. La sangle est utilisée avantageusement en complément d'un collage entre les accumulateurs, et permet d'assurer un maintien mécanique complémentaire avec une masse additionnelle faible. La sangle seule pourrait être également utilisée. Le module M' comporte également une enveloppe continue de vernis (non représentée à des fins de clarté) telle que décrite ci-dessus en relation avec la figure 1 recouvrant les accumulateurs, la plaque support, la plaque électronique, les connexions entre accumulateurs, et les surfaces des canaux 8. Seules les connexions vers l'extérieur ne sont pas recouvertes de vernis.

La plaque support 12 permet la fixation du module à la structure du pack batterie. Des plaques de support latérales pourraient également être ajoutées.

Comme mentionné ci-dessus, le point limitant pour les échanges thermiques est la présence d'une couche limite d'air immobile le long de surfaces latérales des accumulateurs. Il peut être avantageusement prévu de rendre rugueuse la surface des accumulateurs au moins en entrée de la lame d'air de manière à créer des turbulences et à casser cette couche d'air immobile.

Un module dont les accumulateurs seraient disposés dans un plan ne sort pas du cadre de la présente invention.

En général les accumulateurs comportent un dispositif de sécurité de surpression. En cas de défaut interne, de surcharge ou de surdécharge des gaz sont générés dans l'accumulateur, la pression interne augmente et le dispositif de sécurité protège du risque d'explosion en permettant au gaz de s'échapper vers l'extérieur des accumulateurs.

Ces dispositifs de sécurité sont par exemple formés par des disques de rupture à un seuil de pression, par une zone de faiblesse sur le boîtier de l'accumulateur ou par une soupape de sécurité.

Dans le cas des disques de rupture, la couche de vernis mise en oeuvre ne gêne pas leur fonctionnement puisque l'épaisseur de vernis comprise entre 10 µm-100 µm, voire jusqu'à 300 µm, n'a qu'une influence négligeable sur la pression de rupture. De même dans le cas de prédécoupes dans le boîtier de l'accumulateur, l'épaisseur de vernis de 10 µm à 100 µm voire jusqu'à 300 µm ne modifie que très légèrement la pression de rupture.

Dans le cas des soupapes de sécurité, des précautions sont prises pour que la couche de vernis ne bloque pas le fonctionnement de la soupape.

Sur la figure 4A, on peut voir un exemple de réalisation d'une telle soupape de sécurité D vue en coupe montée sur par exemple une face d'extrémité 2.1 d'un accumulateur.

La soupape comporte un corps creux 16 fixé sur le boitier de l'accumulateur, un corps de clapet 18 et un ressort 20. Le boîtier comporte un passage 22 pour l'évacuation de la surpression de gaz, le corps de clapet 18 venant en appui étanche sur le contour du passage 22 forme siège de clapet.

Le corps creux 16 est ouvert de sorte à permettre l'évacuation des gaz, dans l'exemple l'ouverture 24 est au niveau de son extrémité opposée à celle fixée au boîtier de l'accumulateur. Cette ouverture est partiellement obturée par une pièce 26 formant un appui pour le ressort. Le ressort est monté en réaction entre la pièce 26 et le corps de clapet 18 de sorte à appliquer le corps de clapet 18 contre le siège de clapet en l'absence de surpression.

Le ressort 20 est taré en fonction du seuil de surpression souhaité.

Lors de l'enrobage par le vernis, la soupape est par exemple protégée au moyen d'un capuchon qui peut ensuite être laissé en place et sera éjecté lors d'un dégagement de gaz. Le montage du bouchon est alors choisi pour qu'il ne s'oppose pas à l'évacuation des gaz.

En variante, un ruban adhésif pourrait être mis en place sur l'ouverture 24 du clapet pendant le vernissage et ensuite retiré, évitant ainsi au vernis de pénétrer dans l'obturateur. Il peut alors être prévu de disposer ensuite un capuchon sur la soupape pour la protéger de l'environnement extérieur, ce capuchon étant apte à être éjecté lors d'un dégagement de gaz.

En variante, on peut prévoir de disposer un matériau isolant électrique, tel qu'une cire ou une graisse de viscosité adaptée dans le fond du corps creux 16, de sorte à s'interposer entre le vernis et l'obturateur, évitant que l'obturateur ne soit collé sur le siège de clapet par le vernis. Le matériau de protection est tel qu'il n'est pas dissout par le vernis.

L'utilisation d'un matériau de type graisse ou cire au fond du clapet ou d'un bouchon restant sur le clapet offre l'avantage de protéger les pièces métalliques des intempéries lors du fonctionnement normal.

Sur la figure 4B, on peut voir un exemple de réalisation avantageux d'un capuchon de protection du clapet de sécurité monté sur le clapet de surpression.

Le capuchon 28 comporte lui-même un clapet 30 qui s'ouvre à faible pression. Le capuchon est en matériau isolant électrique par exemple en matériau plastique, et le clapet est formé par une découpe dans le fond du capuchon. Comme expliqué ci-dessus la faible épaisseur de vernis ne perturbe pas le fonctionnement de ce clapet 30. Ainsi le clapet de sécurité est protégé lors du vernissage

La mise en oeuvre de ce bouchon offre également l'avantage de protéger la soupape des intempéries et de la poussière.

Sur la figure 5, on peut voir une variante de réalisation, dans laquelle un tube 32 relie l'ouverture 24 du clapet de sécurité à un réservoir 34 pour récupérer les gaz s'échappant de l'accumulateur et/ou l'électrolyte. Le tube est en matériau isolant électrique. Le réservoir est avantageusement situé à une altitude inférieure à celle du clapet de sorte que l'extrémité du tube connectée au clapet ne soit pas remplie d'eau en cas de condensation ou d'intempérie.

Pour les applications de faible puissance ou de recharge rapide, un pack batterie utilisant des modules recouverts d'une ou plusieurs couches de vernis selon l'invention et refroidi par l'air extérieur peut être utilisé, par exemple dans une application à des bus à recharge rapide en bout de ligne. Par exemple, un bus parcourant une ligne de 10 km en 30 mn, se recharge partiellement en bout de ligne en 4 mn avec un régime de charge de 3C à 5C. C'est-à-dire une valeur de courant de charge (en Ampère) de 3 à 5 fois supérieure à la valeur de la capacité (en Ampère.heure).

Dans des applications de faible puissance, l'échauffement est réduit. On peut alors prévoir de placer des filtres sur le circuit d'air dont les performances sont limitées, ceux-ci n'arrêtant que les grosses particules ou les objets. En effet, grâce à la protection électrique apportée par le vernis selon la présente invention, il n'est pas nécessaire d'arrêter les poussières fines. Ceci simplifie les filtres et minimise le coût de maintenance de ceux-ci. Il est possible de n'utiliser qu'une simple grille, pour arrêter les corps les plus gros, et d'ôter à intervalles réguliers par exemple les corps déposés en faisant tourner à l'envers les ventilateurs à pleine puissance. Des ventilateurs de refroidissement de véhicules pouvant tourner dans les deux sens sont alors avantageusement prévus.

Dans les applications de forte puissance lors desquelles l'échauffement est plus important, avec un fonctionnement du circuit de ventilation en "circuit ouvert", le module peut être réalisé de sorte à être tolérant à un encrassement naturel du circuit d'air qui détériore le coefficient d'échange thermique entre les accumulateurs et l'air le refroidissement. Par exemple, les accumulateurs sont espacés les uns des autre d'une distance d'au moins 10 mm de manière à ce que l'encrassement du circuit du à des poussières, ne perturbe pas le refroidissement du système. Il est rappelé la présence de la couche limite de 2 mm à 3mm d'épaisseur autour de chaque accumulateur.

La mise en oeuvre d'une surface rugueuse au moins en entrée des passages entre les accumulateurs décrite ci-dessus pour casser cette couche limite peut permettre de réduire l'espacement entre les accumulateurs.

De manière préférée, on utilisera des ventilateurs pouvant tourner dans les deux sens, la rotation à pleine vitesse en sens inverse permettant d'enlever les grosses particules ou objets qui se sont plaqués sur le filtre éventuel ou sur les constituants du pack batterie.

Le procédé de réalisation de la ou des couches de vernis sur les éléments du module va maintenant être décrit.

Lors d'une première étape, les accumulateurs et les autres éléments composant le module sont solidarisés mécaniquement entre eux, par exemple par collage et/ou au moyen d'une sangle comme cela est représenté sur la figure 2 et/ou par d'autres moyens.

Le ou les dispositifs de sécurité sont protégés suivant l'une des techniques décrites ci-dessus. La connectique de communication entre les électroniques de type CAN par exemple (Controller Area Network) qui est un bus de communication série très utilisé dans les transports par exemple et les liaisons de puissance des bornes des modules du pack sont également protégées provisoirement, par exemple par un ruban adhésif ou des capuchons adaptés.

Lors d'une étape suivante, l'ensemble ainsi formé est trempé dans un bain de vernis.

Lors d'une étape suivante, l'ensemble ainsi enrobé de vernis est ressorti du bain, il est ensuite séché naturellement, dans une étuve ou sous flux selon la vitesse de séchage souhaitée.

Les protections du ou des dispositifs de sécurité le cas échéant et de la connectique et des liaisons de puissance sont retirées après séchage.

Les étapes d'enrobage et de séchage peuvent être répétées plusieurs fois en fonction du nombre de couches que l'on souhaite réaliser.

L'épaisseur de la couche ou des couches est contrôlé en maîtrisant la viscosité du vernis. Dans le cas de plusieurs couches, l'épaisseur de l'ensemble des couches peut être comprise entre 10 µm et 100 µm, voire 200 µm ou encore 300 µm.

On forme ainsi un bloc monolithique d'accumulateurs protégés de manière très efficace et très simple de l'environnement extérieur. En outre, il ne requiert pas la mise en oeuvre de boîtier supplémentaire autour des accumulateurs, le module et donc la batterie peuvent être rendus moins encombrants.

De manière très avantageuse lors de l'étape b) de trempage, un tirage au vide peut avoir lieu ce qui permet de s'assurer que le vernis a recouvert toutes les zones du module et ainsi obtenir un enrobement de bonne qualité. Cette étape de tirage au vide est particulièrement intéressante dans le cas d'accumulateurs comportant une gaine plastique comme enveloppe extérieure ou une enveloppe en carton. Dans le cas de la gaine en plastique, le tirage au vide permet au vernis de s'insinuer entre la gaine et le boîtier de l'accumulateur ce qui assure une très bonne tenue mécanique. Dans le cas d'un carton poreux, le vernis imprègne le carton et colle celui-ci sur l'accumulateur sur toute sa surface.

Pour réaliser un pack de batterie comportant plusieurs modules, chaque module est enrobé d'une ou plusieurs couches de vernis séparément puis les modules sont assemblés par exemple sur une structure de pack et connectés ente eux. Les différents modules peuvent être trempés simultanément dans le bain de vernis ou alors successivement.

La réalisation d'une ou plusieurs couches de vernis offre une protection efficace des éléments d'un module d'accumulateurs vis-à-vis de l'humidité et de la pollution. Du fait de la tenue de l'invention à la condensation ou la pollution extérieure, il est permis de l'utiliser dans des environnements sévère type maritime.

En outre les modules ainsi réalisés présentent une durabilité plus importante due à la protection mécanique mais également à la protection électrique apportée par le vernis.

La présente invention offre également l'avantage d'offrir des modules qui supportent l'immersion accidentelle, par exemple lorsque le véhicule est soumis à une inondation, lors de la chute dans un cours d'eau ou lors du passage d'une zone inondable plus profonde que prévue. L'étanchéité des ensembles de l'état de la technique sont adaptés à des projections d'eau, mais cette étanchéité n'est pas adaptée à une immersion même de faible profondeur, puisqu'il y a des échanges d'air nécessaires entre l'extérieur et l'intérieur des packs batterie pour s'adapter aux différences de pression d'air lors variations d'altitude ou météorologiques.

Grâce à l'invention, un plus grand choix dans l'emplacement du pack batterie est offert. En effet, celui-ci peut être disposé en partie inférieure du véhicule puisque les modules sont protégés contre l'immersion accidentelle.

La mise en oeuvre d'une ou plusieurs couches de vernis continues protège très efficacement les modules et les autres composants d'un pack batterie des intempéries. Néanmoins il ne peut être assuré qu'un défaut dans la ou les couches de vernis ne soit pas présent ou apparaisse au cours du temps.

Un pack de batterie comporte plusieurs modules d'accumulateurs. Au sein d'un module, les accumulateurs de ce modules sont à des potentiels différents, la différence de potentiel ne dépasse pas une tension Vmodule.

Au sein d'un pack, entre modules ou entre accumulateurs de modules différents, la différence de potentiel ne dépasse pas une tension Vpack.

Lors de la charge, le véhicule est relié à la terre, le pack, les modules et les accumulateurs peuvent être soumis à des surtensions réseau si le chargeur utilisé est non isolé (Vmc). Ces surtension réseau peuvent être de plusieurs kilovolts, en particulier en zone rurale et éventuellement, elles peuvent être diminuées par écrêtage sur l'installation électrique en utilisant des parasurtenseurs (appelés parafoudre).

Même si le chargeur est isolé, du fait de sa capacité parasite avec le véhicule une tension Vmc apparait lors des surtensions sur le secteur.

Pour la sécurité des utilisateurs, la carrosserie du véhicule ne doit pas être soumise à une tension supérieure aux tensions de sécurité.

Pour la continuité de service, le courant de fuite à la terre ne doit pas dépasser le courant des disjoncteurs différentiels ou interrupteurs différentiels de l'installation.

Lorsqu'il y a présence d'eau de pluie, de neige ou d'eau issue de condensation, un film d'eau peut se former et un passage de courant entre deux défauts de vernis d'un même module est possible. Il a, cependant, un impact limité. Du fait de la tension de quelques dizaines de volts, des surfaces des défauts et des longueurs de cheminement du courant entre les deux défauts, le niveau de courant sera plutôt de quelques milliampères par exemple et ne donnera lieu qu'à un déséquilibre du module par un peu de décharge de certains accumulateurs. Ceci n'amène pas de risque de sécurité et sera compensé par le circuit d'équilibrage des modules.

En revanche, comme cela a été expliqué plus haut une liaison électrique par un film d'eau entre des modules peut créer un dégagement d'hydrogène à un niveau dangereux, amorcer un arc et créer un départ de feu. Egalement, un passage par l'eau entre un seul module et le véhicule crée un défaut qui peut faire disjoncter l'installation ou être dangereux pour les utilisateurs si la carrosserie du véhicule n'est pas reliée à la terre soit par choix de conception, soit suite à une détérioration de la liaison de mise à la terre. Un passage de courant entre deux modules distincts de tensions très différentes et la carrosserie du véhicule peut créer un dégagement d'hydrogène à un niveau dangereux et/ou amorcer un arc et/ou créer un départ de feu.

Il est alors proposé des moyens adaptés aux modules selon l'invention pour éviter que de tels chemins de conduction de courant se forment, entre les modules ou entre un ou des modules et la carrosserie du véhicule.

Un support isolant électrique est prévu pour supporter une partie au moins des accumulateurs du pack batterie. Le support est tel qu'il assure la rupture de la continuité du film d'eau et l'évacuation de l'eau au goutte à goutte évitant l'établissement d'un chemin de conduction continu.

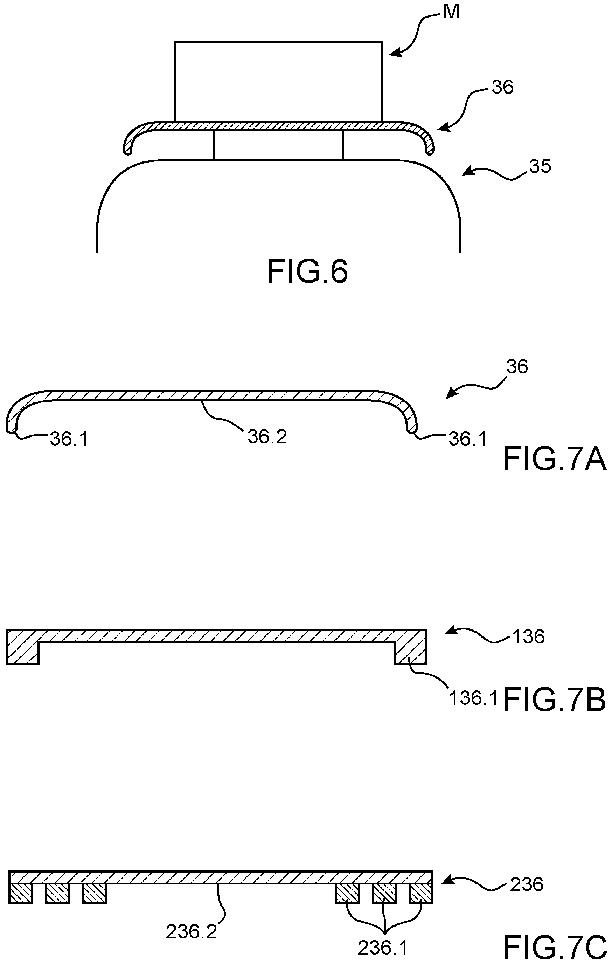

Sur la figure 6, on peut voir un exemple d'un tel support. Celui-ci est dans l'exemple représenté fixé sur le toit d'un véhicule automobile 35 et supporte un module M. Le support 36 comporte des bords latéraux dont la forme empêche le ruissellement de l'eau entre le module et la carrosserie du véhicule qui formerait un chemin de conduction entre le module et la carrosserie qui pourrait être dangereux comme expliqué ci-dessus. La forme du support 36 assure un fractionnement de l'écoulement entre la face supérieure du support et la face inférieure du support sous forme de gouttes d'eau et leur chute à partir du support.

En variante, il pourrait être prévu une ou plusieurs zones en retrait de la face inférieure du support isolant, assurant également une rupture du film de continuité ou une ou plusieurs zones en retrait et/ou une ou plusieurs zones en saillie.

Sur la figure 7A, le support 36 comporte des rebords latéraux 36.1 recourbés vers le bas de sorte que l'extrémité inférieure des rebords soit dans un plan différent de celui de la face inférieure 36.2 du support, provoquant à partir du rebord une chute sous forme de goutte à goutte de l'eau s'écoulant du module.

Dans tous les exemples de réalisation, le support 36 est lui-même supporté de sorte que les éléments en saillie de sa surface inférieure ne soient pas en contact avec une surface.

Les rebords bordent tout le contour extérieur de la face inférieure du support isolant afin d'assurer une rupture du film conducteur dans toutes les directions. Dans la représentation de la figure 7A, il s'agit d'une vue en coupe transversale. Dans le cas d'un support de forme rectangulaire, quatre rebords sont prévus, un pour chacun des côtés. Sur un support en forme de disque, un rebord circulaire est prévu.

Ce support peut être réalisé par exemple d'un seul tenant.

Sur la figure 7B, on peut voir une variante de réalisation du support 136 dans lequel les rebords 136.1 sont droits, et sont par exemple rapportés sur les bords d'une plaque plane.

Sur la figure 7C, on peut voir une autre variante de support 236, dans laquelle la face inférieure 236.2 du support comporte plusieurs éléments 236.1 en saillie définissant entre eux des rainures provoquant l'évacuation à partir du rebord sous forme de goutte à goutte. Une seule rainure est envisageable. La mise en oeuvre de plusieurs rainures évite tout risque d'apparition d'un film continu entre le module et la carrosserie.

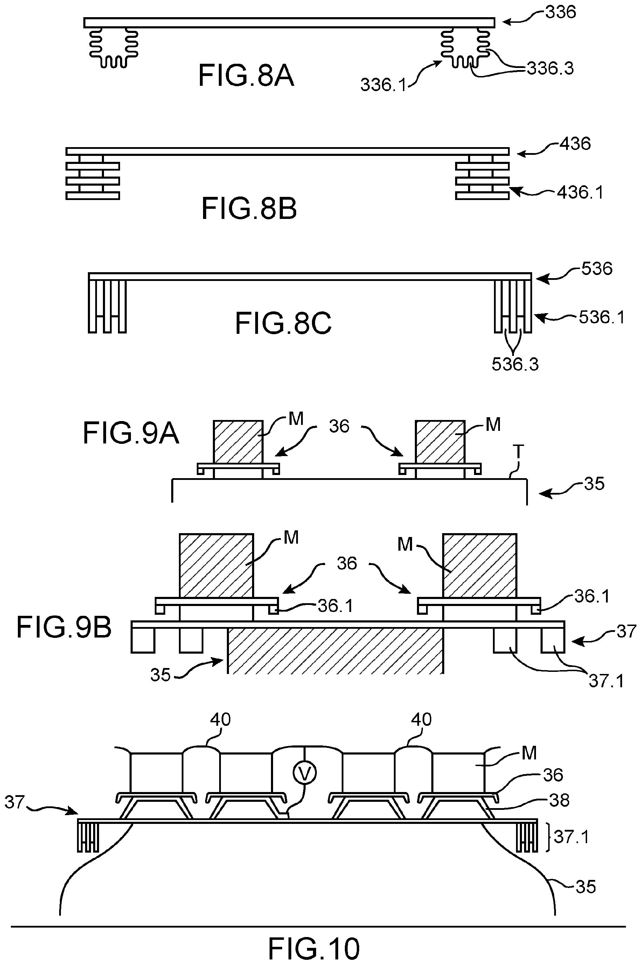

Ce type de support peut avantageusement être mis en oeuvre pour supporter individuellement chaque module sur le toit T du véhicule 35 comme cela est représenté sur la figure 9A.

Ainsi les risques de conduction entre les modules sont évités ainsi que les risques de conduction entre chaque module et la carrosserie.

On peut envisager d'assembler les accumulateurs d'un module avec le support isolant et ensuite de tremper l'assemblage ainsi formé dans la résine.

Sur la figure 9B, on peut voir un autre exemple de réalisation, dans lequel un support 36 est prévu pour chaque module et un support commun 37 est prévu pour tous les supports, le support commun étant tel qu'il provoque la rupture d'un film continu et l'évacuation de l'eau au goutte à goutte. Dans l'exemple représenté, il s'agit d'élément en saillie 37.1 de la face inférieure 37.2 du support commun 37. Ainsi, une isolation est réalisée entre les modules et entre les modules et la carrosserie.

Sur les figures 8A à 8C, on peut voir des variantes de réalisation des supports.

Sur la figure 8A, le support 336 comporte une plaque et des éléments 336.1 rapportés sur sa face inférieure aptes à fractionner le film d'eau provenant de la surface supérieure de la plaque en gouttes et à provoquer leur chute. Sur la figure 8A, les éléments 336.1 ont une forme allongée. Des rainures 336.3 sont formées dans la surface latérale des tiges. Des éléments avec au moins une rainure ne sortent pas du cadre de la présente invention.

Sur la figure 8B, le support 436 comporte les éléments 436.1 de forme allongée et ayant une section rectangulaire, fixés sur la face inférieure de la plaque par l'une des faces. Des rainures 436.3 sont réalisées dans les deux faces perpendiculaires à celle fixée à la plaque. Des éléments dont seule l'une des faces, avantageusement celle orientée vers l'extérieur est munie des rainures ne sortent pas du cadre de la présente invention.

Par exemple, les éléments 436.1 sont réalisés pas empilement et collage de lames ayant des tailles différentes, par exemple les lames sont en verres époxy et elles sont collées avec de la colle époxy. Le support 46 peut également être en verre époxy. Cet exemple de réalisation présente l'avantage de pouvoir être réalisé de manière simple et peu coûteuse par simple collage de plaques de largeurs différentes empilées.

Sur la figure 8C, le support 536 comporte des éléments 536.1 dont les rainures 536.3 sont réalisées dans la face opposée à celle fixée à la plaque.

On pourrait combiner les éléments de figures 8B et 8C, en réalisant des éléments avec des rainures latérales et des rainures dans la face inférieure.

Toute forme et toute section d'élément permettant d'interrompre l'écoulement de l'eau entre la face supérieure et la face inférieure de la plaque peut convenir pour réaliser des éléments rapportés sous la plaque.

Le ou les supports peuvent être réalisés avantageusement en composite verre et époxy, le verre étant généralement sous forme de fibres, ce matériau celui-ci offrant des performances diélectriques élevées avec un coût réduit.

Avantageusement, le ou les supports comportent une surface extérieure présentant en outre des propriétés hydrophobes de sorte que l'eau s'écoule sous forme de gouttes et non sous forme de filet continu. Le ou les supports peuvent être recouverts d'un revêtement hydrophobe, par exemple il peut s'agir d'un vernis par exemple tel que ceux utilisés dans le domaine ferroviaire, ceux-ci étant conçus pour assurer une très bonne protection vis-à-vis de l'environnement, un isolement électrique élevé, et une évacuation de l'eau facilitée.

Il peut être envisagé que le vernis recouvrant le ou les supports soit le même vernis que celui utilisé pour réaliser l'enveloppe continue du ou des modules. Il peut alors être envisagé de tremper l'ensemble formé par le ou les modules et le support dans le bain de vernis afin de former une couche continue recouvrant à la fois le ou les modules et le support.

De manière également avantageuse, la surface supérieure du support présente une surface convexe facilitant l'évacuation de l'eau.

La plaque peut être courbée, la convexité étant orientée vers le haut ou peut comporter deux pans inclinés vers le bas.

Il peut avantageusement être prévu de surveiller la qualité de l'isolement des modules. Par exemple, il est possible de placer une pièce métallique intermédiaire et de surveiller la tension de cette pièce.

Par exemple, on peut prévoir que la chaque support isolant 36 de module repose sur un support métallique 38, les supports métalliques 38 étant montés sur un support isolant reposant sur la carrosserie du véhicule, les supports métalliques sont alors isolés électriquement les uns des autres. Les modules M sont connectés entre eux par des connexions 40.

Les supports métalliques 38 sont tels qu'ils se trouvent au moins en partie à l'aplomb des zones en saillie ou en retrait de sorte que les filets d'eau s'écoulant par gravité de ces zones entrent en contact avec les supports métalliques.

La batterie comporte également des moyens de surveillance de l'impédance entre chaque module ou toute partie connectée électriquement à une borne du module et son support métallique, ces moyens comportent par exemple un voltmètre. En fonctionnement normal, l'impédance mesurée est très élevée, le module est isolé électriquement du support métallique.

En cas de forte pluie où le filet d'eau serait continu ou en cas de formation d'une stalactite qui relierait électriquement le module au support métallique et en cas d'un défaut d'isolation d'un module, l'impédance mesurée chuterait. Cette chute d'impédance est mesurée.

Si une personne venait à toucher le support métallique, celui-ci n'étant pas relié à la terre, elle pourrait être électrisée. En détectant cette chute d'impédance, on peut mettre en oeuvre des moyens pour prévenir les utilisateurs et pour isoler le module défectueux.

Dans cet exemple de réalisation, on peut surveiller individuellement la variation d'impédance entre chaque module et son support métallique et ainsi repérer aisément le module défectueux ou tout élément de connexion défaillant connecté électriquement à une borne d'un module,

En variante, au lieu d'utiliser les supports métalliques, on peut envisager que les supports des chaque support isolant soient eux-mêmes isolants électriques et de prévoir des éléments métalliques conducteurs disposés uniquement à l'aplomb des zones en saillie ou en retrait et de mesurer la variation d'impédance entre le ou les modules et les éléments métalliques.

En variante, on peut envisager que tous les supports métalliques soient connectés électriquement entre eux et de ne surveiller une variation d'impédance qu'entre les modules et les supports métalliques. Avantageusement on peut envisager de mettre en oeuvre un seul support métallique.

Le potentiel du support métallique peut être surveillé par rapport au pack. Par exemple, en mesurant la différence de potentiel du support métallique par rapport au module situé à mi-tension, il est possible de détecter les défauts d'isolement entre les modules d'extrémité et le support.

Quand on relie un voltmètre entre le point milieu du pack et le support métallique, par la résistance interne de forte valeur du voltmètre, le potentiel du support devient celle du point milieu et la différence de potentiel est nulle. Si un chemin de courant fait varier le potentiel du support, le voltmètre verra apparaitre une différence. Cette technique ne permet pas de détecter un chemin de courant provenant du point milieu. On peut faire varier le potentiel, afin de détecter un chemin de courant au point milieu.

D'autres moyens peuvent être mis en oeuvre pour contrôler l'isolement des modules et permettant une détection plus complète, par exemple en faisant varier le point de connexion en tension.

Sur la figure 10, on peut voir un exemple avantageux offrant une double sécurité. Chaque support isolant 36 de modules repose sur un support métallique 38, le support métallique 38 étant monté sur un support isolant commun 37 reposant lui-même sur la carrosserie du véhicule. Les modules M sont connectés entre eux par des connexions 40.

On surveille la variation d'impédance entre les modules et le support métallique, par exemple au moyen d'un voltmètre comme cela est décrit ci-dessus.

On surveille également la variation d'impédance entre le support métallique et la carrosserie, par exemple au moyen d'un impédancemètre.

Si on détecte une chute de l'impédance ente les modules et le support métallique et/ou entre le support métallique et la carrosserie, une alerte peut être envoyée et des mesures peuvent être prises pour isoler le module défectueux ou pour assurer la sécurité des personnes.

Il est à noter que si on détecte uniquement une chute d'impédance entre les modules et le support métallique, une isolation est encore assurée par le support commun et si une chute d'impédance est détectée entre le support commun et le support métallique elle n'est pas dangereuse tant que l'impédance entre les modules et le support métallique reste élevée. En outre, il est à noter que le ou les supports métalliques ne sont pas destinés à être manipulés lors d'un usage courant du véhicule équipé de cette batterie.

## Revendications

1. Module pour batterie électrochimique comportant plusieurs accumulateurs (2) connectés électriquement entre eux par des éléments de connexion (4), des moyens de connexion électrique du module avec l'extérieur et une enveloppe continue (10) réalisée en un matériau polymère diélectrique recouvrant la surface extérieure des accumulateurs (2) et les éléments de connexion (4) et ne recouvrant pas les moyens de connexion du module avec l'extérieur, ladite enveloppe continue (10) étant réalisée par trempage de sorte à assurer un enrobage des accumulateurs (2) et dudit au moins élément de connexion (4), ledit module comportant plusieurs accumulateurs (2) répartis en plusieurs couches, disposés les uns par rapport au autres de sorte qu'un ou des passages (8) soient ménagés entre les accumulateurs, l'enveloppe continue (10) recouvrant la surface du ou des accumulateurs délimitant le ou les passages (8) entre les accumulateurs.

2. Module selon la revendication 1, dans lequel l'épaisseur de l'enveloppe continue (10) est comprise entre 10 µm et 300 µm et/ou ou les matériaux polymères est (sont) choisi(s) parmi les vernis acrylique, silicone ou phénolique.

3. Module selon la revendication 1 ou 2, dans lequel l'enveloppe continue (10) est formée de plusieurs couches réalisées successivement, les couches étant dans un même matériau polymère ou dans des matériaux polymères différents.

4. Module selon l'une des revendications 1 à 3, dans lequel les accumulateurs (2) sont de forme cylindrique à section circulaire, les accumulateurs (2) étant disposés en quinconce, ledit module comportant également des moyens formant entretoise (11) interposés entre les accumulateurs (2).

5. Module selon l'une des revendications 1 à 4, dans lequel au moins un accumulateur (2) comporte un dispositif de sécurité contre la surpression (D), de type à soupape de surpression.

6. Module selon la revendication 5, dans lequel le dispositif de sécurité contre la surpression (D) est recouvert d'un capuchon (28) apte à être éjecté en cas de surpression, ledit capuchon (28) comportant avantageusement une soupape de surpression (30), et/ou le capuchon (28) étant recouvert par le polymère de l'enveloppe

7. Module selon la revendication 5, dans lequel un matériau de remplissage est prévu dans le dispositif de sécurité de surpression empêchant le matériau polymère de perturber le fonctionnement du dispositif de sécurité de surpression.

8. Module selon l'une des revendications 1 à 7, dans lequel au moins une partie de la surface du ou des passages (8) présente un état de surface apte à provoquer un écoulement turbulent et/ ou dans lequel au moins un des accumulateurs (2) a une enveloppe en matériau poreux, de type carton apte à être imprégné par le matériau polymère.

9. Module selon l'une des revendications 1 à 8, comportant une électronique de mesure, d'équilibrage et de gestion à laquelle il est connecté par une connexion électrique, l'électronique de mesure, d'équilibrage et de gestion et ladite connexion électrique étant recouverte par l'enveloppe en matériau polymère.

10. Batterie comportant au moins un module selon l'une des revendications 1 à 9 et avantageusement des moyens pour générer un déplacement d'air entre les accumulateurs.

11. Batterie selon la revendication 10, comportant un ou plusieurs support(s) isolant(s) électrique(s) (36) sur lequel est disposé chaque module, ledit support isolant électrique comportant une face supérieure sur laquelle repose la partie au moins des accumulateurs et une face inférieure (36.2), et au moins une zone en saillie ou en retrait (36.1) de la face inférieure (36.2) formée dans ou sur ladite face inférieure, ladite zone bordant tout ou partie du contour extérieur de la face inférieure (36.2) et un élément support sur lequel repose ledit support isolant électrique, de sorte que ladite zone soit disposée à distance d'une surface sur lequel repose l'élément support afin de provoquer un écoulement par gravité d'un filet de liquide potentiel, la surface comportant avantageusement au moins un élément métallique conducteur situé au moins à l'aplomb de la zone en saillie ou en retrait (36.1) et des moyens pour vérifier l'isolation électrique entre ledit élément métallique conducteur et le module ou toute partie conductrice connectée à une borne dudit module.

12. Véhicule automobile comportant au moins une batterie selon la revendications 10 ou 11.

13. Procédé de réalisation d'un module de batterie électrolytique, comportant plusieurs accumulateurs (2), comprenant les étapes:
a) répartition en plusieurs couches des accumulateurs de sorte qu'un ou des passages (8) soient ménagés entre les accumulateurs,
b) la connexion électrique des accumulateurs entre eux pas des éléments de connexion et la réalisation de moyens de connexion du module vers l'extérieur,
c) protection des moyens de connexion vers l'extérieur,
d) réalisation d'une enveloppe continue en trempant les accumulateurs dans un bain de matériau polymère diélectrique, l'enveloppe continue recouvrant la surface du ou des accumulateurs délimitant le ou les passages entre les accumulateurs, cette étape étant avantageusement réalisée plusieurs fois, le matériau polymère étant identique ou non au matériau polymère de l'étape d) précédente.
e) séchage du matériau polymère.

14. Procédé de réalisation selon la revendication 13, dans lequel lors de l'étape d) un tirage au vide est réalisé.

15. Procédé de réalisation selon la revendication 13 ou 14, dans lequel les accumulateurs sont solidarisés entre eux avant l'étape d), par exemple par collage.

## Patentansprüche

1. Modul für eine elektrochemische Batterie, umfassend mehrere Akkumulatoren (2), die elektrisch miteinander durch Verbindungselemente (4) verbunden sind, Mittel zur elektrischen Verbindung des Moduls mit dem Außenbereich sowie eine durchgehende Umhüllung (10), die aus einem dielektrischen Polymermaterial realisiert ist, das die Außenoberfläche der Akkumulatoren (2) und die Verbindungselemente (4) bedeckt, und das die Mittel zur Verbindung des Moduls mit dem Außenbereich nicht bedeckt, wobei die durchgehende Umhüllung (10) durch Eintauchen derart realisiert ist, dass eine Ummantelung der Akkumulatoren (2) und des wenigstens einen Verbindungselements (4) sichergestellt ist, wobei das Modul mehrere Akkumulatoren (2) umfasst, die in mehrere Schichten verteilt sind, welche relativ zueinander derart angeordnet sind, dass einer oder mehrere Durchgänge (8) zwischen den Akkumulatoren vorgesehen sind, wobei die durchgehende Umhüllung (10) die Oberfläche des oder der Akkumulatoren bedeckt, die den oder die Durchgänge (8) zwischen den Akkumulatoren begrenzt.

2. Modul nach Anspruch 1, wobei die Dicke der durchgehenden Umhüllung (10) zwischen 10 µm und 300 µm enthalten ist, und/oder wobei die Polymermaterialien ausgewählt ist/sind aus den Acryl-, Silikon- oder Phenollacken.

3. Modul nach Anspruch 1 oder 2, wobei die durchgehende Umhüllung (10) mit mehreren sukzessiv realisierten Schichten gebildet ist, wobei die Schichten aus ein und demselben Polymermaterial oder aus verschiedenen Polymermaterialien sind.

4. Modul nach einem der Ansprüche 1 bis 3, wobei die Akkumulatoren (2) eine Zylinderform mit kreisförmigem Querschnitt haben, wobei die Akkumulatoren (2) versetzt angeordnet sind, wobei das Modul ferner Mittel umfasst, die einen Abstandhalter (11) bilden, die zwischen den Akkumulatoren (2) eingefügt sind.

5. Modul nach einem der Ansprüche 1 bis 4, wobei wenigstens ein Akkumulator (2) eine Sicherheitsvorrichtung gegen einen Überdruck (D) vom Typ Überdruckventil umfasst.

6. Modul nach Anspruch 5, wobei die Sicherheitsvorrichtung gegen Überdruck (D) von einer Kappe (28) bedeckt ist, die dazu ausgelegt ist, im Fall von Überdruck ausgestoßen zu werden, wobei die Kappe (28) vorzugsweise ein Überdruckventil (30) umfasst, und/oder wobei die Kappe (28) durch das Polymer der Umhüllung bedeckt ist.

7. Modul nach Anspruch 5, wobei ein Füllmaterial in der Überdrucksicherheitsvorrichtung vorgesehen ist, welches verhindert, dass das Polymermaterial die Funktion der Überdrucksicherheitsvorrichtung stört.

8. Modul nach einem der Ansprüche 1 bis 7, wobei wenigstens ein Teil der Oberfläche des Durchgangs oder der Durchgänge (8) einen Oberflächenzustand aufweist, der dazu ausgelegt ist, eine turbulente Strömung zu bewirken, und/oder wobei wenigstens einer der Akkumulatoren (2) eine Umhüllung aus porösem Material vom Typ Karton hat, die dazu ausgelegt ist, durch das Polymermaterial imprägniert zu sein.

9. Modul nach einem der Ansprüche 1 bis 8, umfassend eine Mess-, Abgleich- und Steuerelektronik, mit der es durch eine elektrische Verbindung verbunden ist, wobei die Mess-, Abgleich- und Steuerelektronik und die elektrische Verbindung durch die Umhüllung aus Polymermaterial bedeckt sind.

10. Batterie, umfassend wenigstens ein Modul nach einem der Ansprüche 1 bis 9 und vorzugsweise Mittel zur Erzeugung einer Luftverlagerung zwischen den Akkumulatoren.

11. Batterie nach Anspruch 10, umfassend einen oder mehrere elektrisch isolierende(n) Träger (36), auf dem jedes Modul angeordnet ist, wobei der elektrisch isolierende Träger eine obere Fläche umfasst, auf der wenigstens ein Teil der Akkumulatoren ruht, und eine untere Fläche (36.2), sowie wenigstens eine vorstehende oder zurückspringende Zone (36.1) der unteren Fläche (36.2), die in oder auf der unteren Fläche gebildet ist, wobei die Zone den gesamten oder einen Teil der Außenkontur der unteren Fläche (36.2) und ein Tragelement umsäumt, auf dem der elektrisch isolierende Träger ruht, derart, dass die Zone im Abstand von einer Oberfläche angeordnet ist, auf der das Tragelement ruht, um eine Schwerkraftströmung eines dünnen Potentialflüssigkeitsstrahls zu bewirken, wobei die Oberfläche vorzugsweise wenigstens ein leitendes Metallelement umfasst, das wenigstens im Lot zur vorstehenden oder zurückspringenden Zone (36.1) angeordnet ist, sowie Mittel zur Überprüfung der elektrischen Isolierung zwischen dem leitenden Metallelement und dem Modul oder jedem leitenden Teil, das mit einem Anschluss des Moduls verbunden ist.

12. Automobilfahrzeug, umfassend wenigstens eine Batterie nach Anspruch 10 oder 11.

13. Verfahren zur Herstellung eines Elektrolytbatteriemoduls, umfassend mehrere Akkumulatoren (2), umfassend die folgenden Schritte:
a) Verteilen der Akkumulatoren in mehreren Schichten derart, dass einer oder mehrere Durchgänge (8) zwischen den Akkumulatoren vorgesehen sind,
b) elektrisches Verbinden der Akkumulatoren miteinander durch Verbindungselemente und Realisieren von Mitteln zur Verbindung des Moduls mit dem Außenbereich,
c) Schützen der Mittel zur Verbindung mit dem Außenbereich,
d) Realisieren einer durchgehenden Umhüllung durch Eintauchen der Akkumulatoren in ein Bad von dielektrischem Polymermaterial, wobei die durchgehende Umhüllung die Oberfläche des oder der Akkumulatoren bedeckt, die den Durchgang oder die Durchgänge zwischen den Akkumulatoren begrenzt, wobei dieser Schritt vorzugsweise mehrfach durchgeführt wird, wobei das Polymermaterial wohl oder nicht identisch ist mit dem Polymermaterial des vorhergehenden Schritts d),
e) Trocknen des Polymermaterials.

14. Herstellungsverfahren nach Anspruch 13, bei dem während des Schritts d) eine Evakuierung durchgeführt wird.

15. Herstellungsverfahren nach Anspruch 13 oder 14, wobei die Akkumulatoren vor dem Schritt d) miteinander verbunden werden, beispielsweise durch Verkleben.

## Claims

1. Module for an electrochemical battery comprising several accumulators (2) electrically connected together by connection elements (4), means for electrical connection of the module with the exterior and a continuous envelope (10) made from a dielectric polymer material which covers the exterior surface of the accumulators (2) and the connection elements (4) and which does not cover the means of connecting the module with the exterior, said continuous envelope (10) being made by soaking so as to ensure coating of the accumulators (2) and of said one or more connecting elements (4), said module comprising several accumulators (2) distributed into several layers, arranged in relation to each other so that one or more passages (8) are made between the accumulators, the continuous envelope (10) covers the surface of the accumulator or accumulators delimitating the passages (8) between the accumulators.

2. Module according to claim 1, wherein the thickness of the continuous envelope (10) is between 10 µm and 300 µm and/or the polymer material is or polymer materials are chosen from acrylic, silicone or phenolic lacquers.

3. Module according to claim 1 or 2, wherein the continuous envelope (10) is formed of several layers made successively, where the layers are made from the same polymer material or from different polymer materials.

4. Module according to one of claims 1 to 3, wherein the accumulators (2) are cylindrical in shape with a circular cross-section, with the accumulators (2) being arranged in a staggered rows manner, said module also comprising means which form spacers (11) placed in between the accumulators (2).

5. Module according to one of claims 1 to 4, wherein at least one accumulator (2) comprises a safety device against excess pressure (D), of the pressure relief valve type.

6. Module according to claim 5, wherein the safety device against excess pressure (D) is covered by a cap (28), designed to be ejected in the event of excess pressure, said cap (28) advantageously comprising an excess pressure vent (30), and/or the cap (28) being covered by the polymer of the envelope.

7. Module according to claim 5, wherein a filler material is provided in the excess pressure safety device which prevents the polymer material from adversely affecting the operation of the excess pressure safety device.

8. Module according to one of claims 1 to 7, wherein at least one part of the surface of the passage or passages (8) exhibits a surface condition that is designed to cause turbulent flow and/or wherein at least one of the accumulators (2) has an envelope made of porous material, such as card, suitable for being impregnated with the polymer material.

9. Module according to one of claims 1 to 8, comprising electronics for measurement, balancing and control to which it is connected by an electrical connection, where the electronics for measurement, balancing and control and said electrical connection are covered by the envelope of polymer material.

10. Battery comprising at least one module according to one of claims 1 to 9 and advantageously means of generating a movement of air between the accumulators.

11. Battery according to claims 10, comprising at least one electrically insulating support (36) on which each module is arranged, said electrically insulating support comprising an upper face on which at least a part of the accumulators rests and a lower face (36.2), and at least one protruding or receding zone (36.1) of the lower face (36.2) formed in or on said lower face, said zone edging all or part of the external contour of the lower face (36.2) and a support element upon which said electrically insulating support rests, such that said zone is arranged at a distance from a surface on which the support element rests in order to cause a potential stream of liquid to flow under gravity, the surface advantageously comprising at least one conductive metallic element located at least vertically in line with the protruding or receding zone (36.1) and means of verifying the electrical insulation between said metallic conductive element and the module or any conductive part connected to a terminal of said module.

12. Automotive vehicle comprising at least one battery according to claim 10 or 11.

13. Method for manufacturing an electrolytic battery module, comprising several accumulators (2), which comprises the following steps:
a) distribution of the accumulators into several layers so that one or more passages (8) are made between the accumulators,
b) electrical connection of the accumulators to each other through connecting elements and the creation of means of connection of the module to the exterior,
c) protection of the means of connection to the exterior,
d) the creation of a continuous envelope by soaking the accumulators in a bath of dielectric polymer material, where the continuous envelope covers the surface of the accumulator or accumulators marking out the boundary of the passages between the accumulators, said step being carried out several times, where the polymer material is the same as polymer material in the previous step d) or not.
e) drying of the polymer material.

14. Manufacturing method according to claim 13, wherein a vacuum is created during step d).

15. Manufacturing method according to claim 13 or 14 wherein the accumulators are joined together before step d), for example by bonding.
